# EUROPÄISCHE PATENTANMELDUNG

(11) **EP 0 826 583 A2**
(43) Veröffentlichungstag der Anmeldung: **04.03.1998**
(21) Anmeldenummer: 97114638.6
(22) Anmeldetag: 23.08.1997
(51) Int. Cl.: B62H 5/00, E05C 19/18

(54) **Diebstahlsicherung, insbesondere für Zweiräder**

(30) Priorität: 31.08.1996 DE 19635442; 23.07.1997 DE 19731569
(71) Anmelder: Guenzler, Nicole, 70619 Stuttgart (DE); Yoksulabakan, Hasan, 70619 Stuttgart (DE)
(72) Erfinder: Guenzler, Nicole, 70619 Stuttgart (DE); Yoksulabakan, Hasan, 70619 Stuttgart (DE)
(74) Vertreter: Haar, Lucas H., Dipl.-Ing.

(57) **Zusammenfassung**

Eine Diebstahlsicherung zum Sichern von Zweirädern oder anderen Gegenständen hat zwei ringförmige, in ihrer Schließstellung durch ein Sperrschloß verriegelbare Schellen (2), die durch ein Gestänge (1) miteinander verbunden sind. Die Schellen (2) sind mittels Gelenken (3) an dem Gestänge (1) drehbar und schwenkbar befestigt. Das Gestänge (1) ist aus zwei in ihrer Länge veränderbaren Abschnitten (4) zusammengesetzt, die durch ein Gelenk (5) knickbar miteinander verbunden sind.

## Beschreibung

Die Erfindung betrifft eine Diebstahlsicherung zum Sichern von Zweirädern oder anderen Gegenständen.

Zur Sicherung von Zweirädern werden bevorzugt Diebstahlsicherungen verwendet, mit denen man die Zweiräder und nach Möglichkeit auch ihre demontierbaren Bauteile an einer ortsfesten Halterung anschließen kann. Bekannte Diebstahlsicherungen dieser Art bestehen aus einem langgestreckten, flexiblen Element, beispielsweise einem Stahlseil oder einer Kette, dessen Enden zur Bildung eines geschlossenen Rings durch ein Schloß lösbar miteinander verbunden werden können. Obwohl das flexible Element aus einem hochfesten Material hergestellt wird, ist es doch möglich, mit einem Bolzenschneider größeren Kalibers das Element zu durchtrennen und damit den Ring zu öffnen.

Es sind weiterhin Bügelschlösser bekannt, die einen aus einem robusten Metallstab gebogenen, U-förmigen, starren Bügel haben, dessen freie Schenkelenden durch eine mit einem Schloß versehene Traverse zur Bildung eines geschlossenen Rings miteinander verbunden werden können. Diese Schlösser sind widerstandsfähiger als die zuvor genannten, sie haben jedoch den Nachteil, daß der starre Bügel aus Handhabungsgründen nur einen relativ kleinen Umfang hat, so daß bei ungünstiger Lage der ortsfesten Halterung das Zweirad nur an peripheren Bauteilen gesichert werden kann.

Der Erfindung liegt die Aufgabe zugrunde, eine Diebstahlsicherung für Zweiräder und andere Gegenstände zu schaffen, die leicht zu handhaben ist, ein hohes Maß an Sicherheit bietet und auch zur Überbrückung größerer Abstände zwischen dem zu sichernden Gegenstand und einer ortsfesten Halterung geeignet ist.

Diese Aufgabe wird erfindungsgemäß durch eine Diebstahlsicherung gelöst, die zwei ringförmige, in ihrer Schließstellung durch ein Sperrschloß verriegelbare Schellen aufweist, die durch ein Gestänge, ein Seil oder eine Kette miteinander verbunden sind, wobei wenigstens eine Schelle an dem Gestänge drehbar befestigt ist.

Bei der erfindungsgemäßen Diebstahlsicherung wird das Verbindungselement, das den angeschlossenen Gegenstand mit der ortsfesten Halterung verbindet, nicht zu einem Ring geschlossen, sondern an seinen beiden entgegengesetzten Enden jeweils mit einer verschließbaren Schelle an dem Gegenstand bzw. der Halterung befestigt. Hierdurch ist es möglich, das Verbindungselement sehr robust auszubilden, so daß es mit verfügbaren Schneidgeräten nicht ohne weiteres durchtrennt werden kann. Auch die Möglichkeit des Aufhebelns ist nicht gegeben, da das Verbindungselement im Gegensatz zu einem geschlossenen Ring hierfür keinen Ansatzpunkt bietet. Die Schellen lassen sich recht dicht um die von ihnen umgriffene Strebe herumlegen und so robust ausführen, daß auch hier ein Aufhebeln nicht möglich ist. Die erfindungsgemäße Diebstahlsicherung ist weiterhin einfach zu handhaben. An einem Fahrrad läßt sie sich mit Hilfe beider Schellen parallel zu einem Rahmenrohr gut befestigen und leicht transportieren. Eine besondere Haltevorrichtung ist nicht erforderlich. Soll das Fahrrad angeschlossen werden, so genügt es, die Schelle an einem Ende des Gestänges zu öffnen und an der ortsfesten Halterung zu befestigen. Wird auch die zweite Schelle vom Rahmen gelöst, so besteht andererseits auch die Möglichkeit durch Befestigung der zweiten Schelle am Hinterrad und Durchstecken des Verbindungselements durch Rahmen und Vorderrad das Hinterrad, das Vorderrad und den Rahmen gemeinsam zu sichern. Ebenso können mit der erfindungsgemäßen Diebstahlsicherung auch mehrere nebeneinander stehende Zweiräder gesichert werden.

Um eine über die geeignete Transportlänge des als Gestänge ausgebildeten Verbindungselements hinausgehende, zum Anschließen nutzbare Länge zur Verfügung zu haben, ist nach einem weiteren Vorschlag der Erfindung das Gestänge in seiner Länge veränderbar. Dies kann auf einfache Weise dadurch erreicht werden, daß das Gestänge aus teleskopartig ineinandersteckbaren, stabförmigen Elementen besteht.

Erfindungsgemäß kann weiterhin vorgesehen sein, daß das Gestänge aus mehreren Abschnitten besteht, die durch ein Gelenk miteinander verbunden sind. Hierdurch wird die Handhabbarkeit der Diebstahlsicherung noch weiter vereinfacht und ihre Anwendungsmöglichkeiten werden erweitert. Auch hierbei können die einzelnen Abschnitte in ihrer Länge veränderbar sein, z.B. aus teleskopartig ineinandersteckbaren Elementen bestehen. Vorteilhaft ist weiterhin, wenn die Schellen durch Gelenke mit dem Gestänge verbunden sind. Die Schellen können dann in eine Winkellage zum Gestänge bzw. seiner Abschnitte gebracht werden, wodurch auch eine Befestigung der Schellen an einer im wesentlichen parallel zum Gestänge verlaufenden Strebe ermöglicht wird. Als Gelenke können erfindungsgemäß einfache Drehgelenke, Kreuzgelenke, Biegegelenke oder Kugelgelenke, vorgesehen sein.

Nach einem weiteren Vorschlag der Erfindung kann ein in der Mitte zwischen zwei Abschnitten des Gestänges angeordnetes Gelenk so gestaltet sein, daß die beiden Abschnitte parallel nebeneinander gelegt werden können. Hierdurch läßt sich die Diebstahlsicherung zum Transport zusammenlegen, so daß sie wenig Raum beansprucht und auch zum Beispiel in einem Motorradkoffer untergebracht werden kann. Wird die Diebstahlsicherung aufgeklappt und auseinandergezogen, so ist ihre Länge so ausreichend zu bemessen, daß sie an beiden Rädern eines Motorrads befestigt werden kann.

Bei einer vornehmlich für Fahrräder vorgesehenen Variante der Diebstahlsicherung kann nach einem weiteren Vorschlag der Erfindung an einem Gelenk, das zwei Gestängeabschnitte verbindet, eine Sperre vorgesehen sein, durch die das Gelenk in einer Stellung blockierbar ist, in der die Längsachsen der Abschnitte auf einer gemeinsamen Geraden liegen. Durch das Blockieren des Gelenks bildet das Gestänge einen starren Stab, der mit Hilfe der Schellen an seinem Ende zum Transport an einem Rahmenrohr eines Fahrrads auf einfache Weise befestigt werden kann. Die Sperre kann erfindungsgemäß so gestaltet sein, daß sie durch Ineinanderstecken der Teleskopelemente sperrend wird.

Die Schellen können erfindungsgemäß aus zwei halbkreisförmigen Bügeln bestehen, die an einem Ende durch ein Drehgelenk verbunden sind und mit ihrem anderen Ende ein Schnappschloß bilden. Das Schnappschloß kann mehrere Schließstellungen haben, um die Öffnung der Schellen an unterschiedlich dicke Halterungen anpassen zu können. Um Beschädigungen an den zu sichernden Gegenständen zu vermeiden, kann die Oberfläche, oder nur die Anlagefläche der Schellen und/oder des Gestänges mit einem gummielastischen Überzug versehen sein.

Nach einem weiteren Vorschlag der Erfindung kann die Diebstahlsicherung in den Rahmen eines Fahrrads integriert sein, indem sie als Strebe des Rahmens ausgebildet ist. Hierzu können beide Enden der Diebstahlsicherung lösbar, beispielsweise mit Hilfe eines Bajonettverschlusses mit dem Fahrradrahmen verbunden sein. Zum Sichern des Fahrrads sind dann beide Enden der Strebe zu lösen und mit den daran angeordneten Schellen am Fahrradrahmen und an einem Halteteil anzuschließen. Eine andere Lösung kann auch darin bestehen, daß nur ein Ende der Strebe eine Schelle aufweist und von dem Fahrradrahmen lösbar ist, während das andere Ende der Strebe flexibel und unlösbar mit dem Fahrradrahmen verbunden ist. In diesem Fall ist zum Anschließen des Fahrradrahmens nur ein Ende der Strebe zu lösen.

Die Erfindung wird nachfolgend anhand von Ausführungsbeispielen näher erläutert, die in der Zeichnung dargestellt sind. Es zeigen
- Figur 1: eine Ansicht einer erfindungsgemäßen Diebstahlsicherung in gestreckter Lage mit geschlossenen Schellen,
- Figur 2: eine Ansicht der Diebstahlsicherung gemäß Figur 1 in mehrfach geknickter Lage und mit geöffneten Schellen,
- Figur 3: eine Kugelgelenkanordnung zum Verbinden der Mittelenden zweier Gestängeabschnitte,
- Figur 4: eine schematische Darstellung eines Fahrrads mit am Rahmenrohr angebrachter Diebstahlsicherung,
- Figur 5: eine schematische Darstellung eines Fahrrads mit einer in den Rahmen integrierten Diebstahlsicherung,
- Figur 6: eine zusammenlegbare Ausbildung einer Schelle und
- Figur 7: einen Ausschnitt eines Fahrradrahmens mit einem als Transportbehälter für die Diebstahlsicherung gestalteten Rahmenrohr.

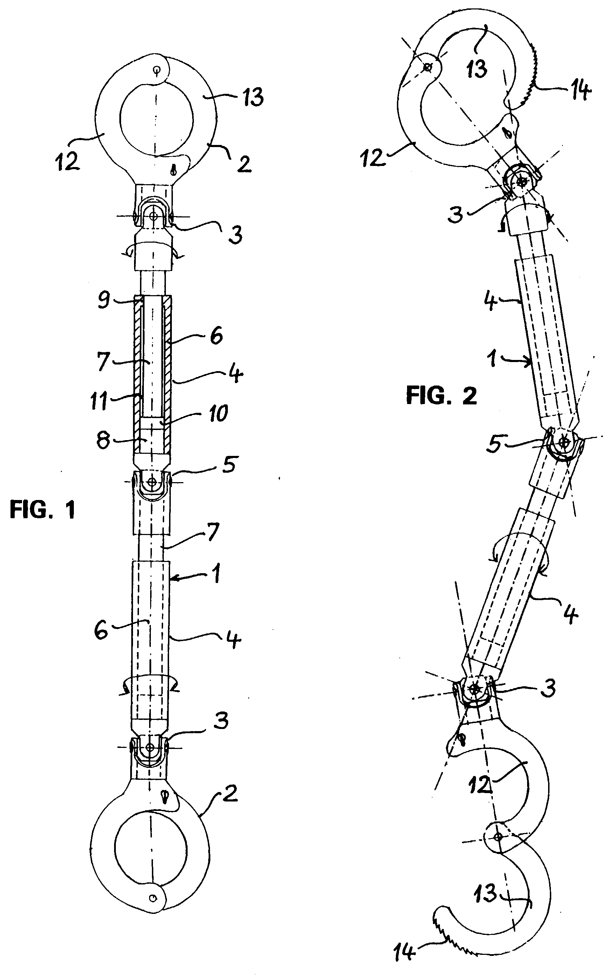

Die in Figur 1 dargestellte Diebstahlsicherung besteht aus einem geraden Gestänge 1, das an seinen beiden Enden jeweils eine mit einem Schnappschloß versehene Schelle 2 aufweist. Die Schellen 2 sind durch Kreuzgelenke 3 mit dem Gestänge 1 verbunden, die um jede Gelenkachse einen Drehwinkel von 180° haben. Bedingt durch die Ausgestaltung des Gestänges 1 sind die Kreuzgelenke 3 außerdem um die Längsachse des Gestänges 1 drehbar.

Das Gestänge 1 besteht aus zwei gleichen Gestängeabschnitten 4, die durch ein Kreuzgelenk 5 miteinander verbunden sind. Jeder Gestängeabschnitt 4 weist eine zylindrische Hülse 6 und eine in der Bohrung der Hülse 6 drehbar und axial verschiebbar gelagerte Stange 7 auf. Die Hülse 6 ist mit einem Ende auf einem Zapfen 8 des Kreuzgelenks 3 bzw. 5 durch Kleben, Schrauben, Löten, Schweißen oder dergleichen befestigt. Das andere Ende der Hülse 6 ist mit einem in die Hülsenbohrung hineinragenden Anschlagbund 9 versehen, in dessen Bohrung die Stange 7 geführt ist. Die Stange 7 hat an ihrem in der Hülse 6 befindlichen Ende einen Anschlagkopf 10, der in axialer Richtung an dem Anschlagbund 9 abstützbar ist, so daß die Stange 7 nicht vollständig aus der Hülse 6 herausgezogen werden kann. Der Anschlagkopf 10 dient außerdem zur Führung des inneren Endes der Stange 7 an der Wand der Hülsenbohrung 11. Das außerhalb der Hülse 6 befindliche Ende der Stange 7 ist in analoger Weise wie die Hülse 6 an dem Kreuzgelenk 3 bzw. 5 befestigt.

Durch die beschriebene Ausgestaltung der Gestängeabschnitte 4 kann die Länge der Diebstahlsicherung erheblich vergrößert werden. Außerdem können die drei Kreuzgelenke 3, 5 beliebig gegeneinander verdreht werden, so daß ihre maximalen Drehwinkel in jeder beliebigen Richtung genutzt werden können. Anstelle der Kreuzgelenke können auch ohne Einschränkung der Freiheitsgrade Drehgelenke mit nur einer Schwenkachse vorgesehen sein. Soll das Kreuzgelenk 5 in gerader Stellung blockiert werden, so kann dies mittels einer zylindrischen Hülse erfolgen, die über das Kreuzgelenk 5 schiebbar ist.

Figur 2 veranschaulicht die unterschiedlichen Bewegungsmöglichkeiten der Bauteile der Diebstahlsicherung. Sie zeigt darüberhinaus die Schellen 2 in Offenstellung. Die Schellen 2 bestehen aus einem an dem jeweiligen Kreuzgelenk 3 befestigten Bügel 12, der in seinem Befestigungsende eine mit einem Schlüssel zu entriegelnde Sperrklinke enthält. An dem anderen Ende des Bügels 12 ist ein Bügel 13 drehbar gelagert. Das freie Ende des Bügels 13 ist auf seiner Außenseite mit Sperrzähnen 14 versehen, in die die Sperrklinke einschnappt, wenn der Bügel 13 in die in Figur 1 gezeigte Schließstellung gebracht wird. Durch das Anordnen mehrerer Sperrzähne 14 werden mehrere Schließstellungen mit unterschiedlicher Öffnungsweite der Schellen 2 ermöglicht.

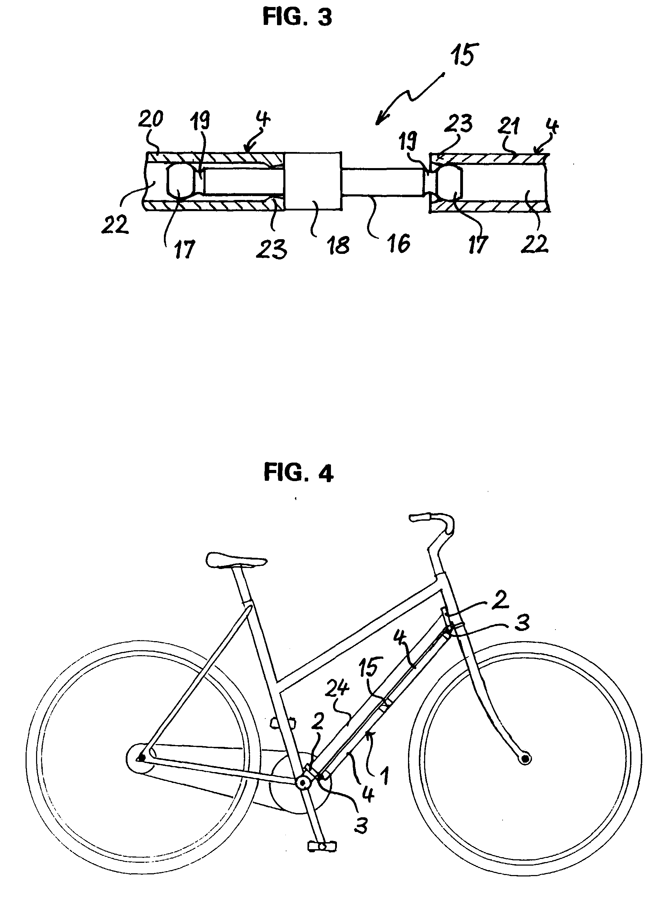

Figur 3 zeigt eine Kugelgelenkanordnung 15, die anstelle des Kreuzgelenks 5 zur Verbindung zweier Gestängeabschnitte 4 einsetzbar ist. Die Kugelgelenkanordnung 15 besteht aus einer symmetrischen Gelenkstange 16, die an ihren entgegengesetzten Enden jeweils einen als Kugelabschnitt gestalteten Gelenkkopf 17 trägt. Der Kugeldurchmesser der Gelenkköpfe 17 ist größer als der Durchmesser der zylindrischen Gelenkstange 16. In der Mitte weist die Gelenkstange 16 einen zylindrischen Bund 18 größeren Durchmessers auf. Zwischen den Gelenkköpfen 17 und der Gelenkstange 16 ist eine Einschnürung 19 zur Vergrößerung des Schwenkwinkels vorgesehen. Die Gelenkköpfe 17 befinden sich in einer Hülse 20 bzw. 21, die Teil des jeweiligen Gestängeabschnitts 4 ist, und sind in der entsprechenden Hülsenbohrung 22 drehbar und axial verschiebbar geführt. Die Enden der Hülse 20, 21 sind mit einem in die Hülsenbohrung hineinragenden und als Widerlager für die Gelenkköpfe 17 dienenden Anschlagbund 23 versehen, dessen kleinster Durchmesser dem Außendurchmesser der Gelenkstange 16 entspricht.

Die Zeichnung zeigt die beiden möglichen Endstellungen, die die Hülsen 20, 21 gegenüber der Gelenkstange 16 einnehmen können. Die Hülse 20 nimmt das ihr zugekehrte Ende der Gelenkstange 16 vollständig auf und liegt an dem Bund 18 an. In dieser Stellung ist die Gelenkstange 16 biegesteif mit der Hülse 20 verbunden; eine Knickung ist nicht möglich. Aus der Hülse 21 ist die Gelenkstange 16 soweit herausgezogen, daß der Gelenkkopf 17 an dem Anschlagbund 23 anliegt. In dieser Stellung können die Längsachsen der Gelenkstange 16 und der Hülse 21 in beliebiger Richtung in eine Winkellage zueinander gebracht werden, wobei der maximal erreichbare Winkel allerdings kleiner ist als bei dem Ausführungsbeispiel gemäß den Figuren 1 und 2.

Die beschriebene Kugelgelenkanordnung bietet die Möglichkeit, je nach Stellung der Hülsen 20, 21 zur Gelenkstange 16 entweder eine biegesteife Verbindung oder eine gelenkige Verbindung herzustellen. Die biegesteife Verbindung, bei der die Gestängeabschnitte den geringsten Abstand voneinander haben, ist zum Transport der Diebstahlsicherung am Fahrrad gedacht, da sich das Gestänge dann wie eine starre Stange ohne zusätzliche Hilfsmittel mit den beiden Schellen an einem Rahmenrohr befestigen läßt. Die auseinandergezogene, gelenkige Verbindung erleichtert das Montieren der Diebstahlsicherung beim Schließen eines Fahrrads. Die Gelenkstange 16 kann auch anstelle der Stangen 7 zur Längenänderung des Gestänges verwendet und entsprechend lang ausgeführt werden.

Figur 4 zeigt die Anbringung einer erfindungsgemäßen Diebstahlsicherung an einem Fahrrad. Das zusammengeschobene Gestänge 1 ist mit den beiden Schellen 2 an dem Holm 24 des Fahrrads befestigt. Eine zusätzliche Halterung ist nicht erforderlich, da die Gelenkanordnung 15 in dieser Lage der Gestängeteile biegesteif ist.

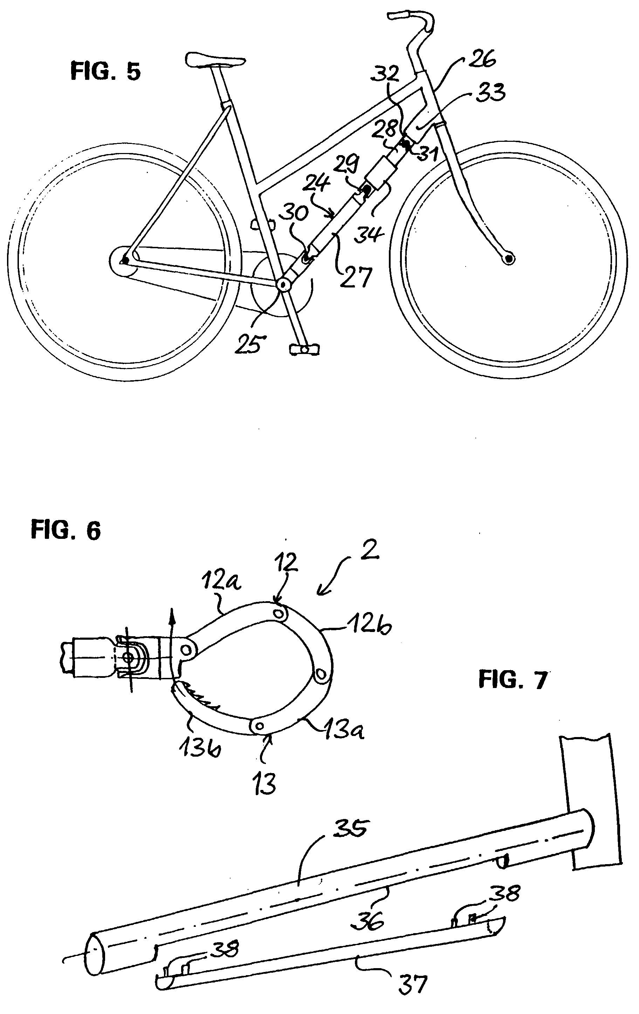

Bei dem in Figur 5 gezeigten Ausführungsbeispiel ist die untere Strebe 24, die das Tretlager 25 mit dem Gabelkopf 26 eines Fahrradrahmens verbindet, als Diebstahlsicherung ausgebildet. Die Strebe 24 besteht aus zwei Stangen 27, 28, die durch ein Gelenk 29 miteinander verbunden sind. Das dem Gelenk 29 entgegengesetzte Ende der Stange 27 ist durch eine Gelenk 30 mit dem Gehäuse des Tretlagers 25 unlösbar verbunden. An dem dem Gelenk 29 entgegengesetzten Ende der Stange 28 ist über ein Gelenk 31 ein Steckzapfen 32 befestigt, der in einen an dem Gabelkopf 26 angebrachten Rohrstutzen 33 eingesteckt ist und durch einen Bajonettverschluß in dem Rohrstutzen 33 lösbar gehalten ist. Der Steckzapfen 32 trägt an seinem Ende eine zusammenfaltbare Schelle in der Art des Ausführungsbeispiels gemäß Figur 6, die ebenfalls in dem Rohrstutzen 33 untergebracht ist. Auf der Stange 28 befindet sich eine Schiebehülse 34, die über das Gelenk 29 geschoben werden kann, um eine steife Verbindung zwischen den Stangen 27, 28 herzustellen.

Zum Anschließen des Fahrrads gemäß Figur 5 wird der Bajonettverschluß zwischen dem Steckzapfen 32 und dem Rohrstutzen 33 durch Drehen des Steckzapfens 32 gelöst und der Steckzapfen 32 zusammen mit der daran befestigten Schelle aus dem Rohrstutzen 33 herausgezogen. Anschließend kann die Schelle um die Halterung, an die das Fahrrad angeschlossen werden soll, herumgelegt und geschlossen werden.

Figur 6 zeigt eine Ausführungsform einer Schelle 2 bei der die Bügel 12, 13 jeweils aus zwei durch ein Drehgelenk miteinander verbundenen Bügelteilen 12a, 12b und 13a, 13b gebildet sind, wobei die Drehachsen der Drehgelenke parallel zu den Drehachsen an den Enden der Bügel 12, 13 ausgerichtet sind. Die Bügelteile 12a, 12b, 13a, 13b können gerade oder um eine zu den Drehachsen parallele Achse gekrümmt sein. Durch diese Ausgestaltung können die Bügel 12, 13 soweit zusammengelegt werden, daß sie in ein Rohr von einer Größe, wie es bei Fahrradrahmen verwendet wird, einsteckbar sind.

Figur 7 zeigt eine Möglichkeit der Ausgestaltung eines Fahrradrahmens zur Aufbewahrung einer Diebstahlsicherung gemäß den Figuren 1 bis 3, wenn diese mit zusammenlegbaren Schellen gemäß Figur 6 ausgerüstet sind. Hierzu weist das Rahmenrohr 35 eine langgestreckte Öffnung 36 auf, die sich etwa über die Hälfte des zylindrischen Rohrquerschnitts erstreckt. Durch die Öffnung 36 kann die Diebstahlsicherung in das Rahmenrohr 35 eingelegt werden. Anschließen wird die Öffnung 36 mit einem halbzylindrischen Deckel 37 verschlossen. Der Deckel wird durch elastische Clips 38 gehalten, die in der Öffnung des Rahmenrohrs einrasten.

## Patentansprüche

1. Diebstahlsicherung zum Sichern von Zweirädern oder anderen Gegenständen, **gekennzeichnet** durch zwei ringförmige, in ihrer Schließstellung durch ein Sperrschloß verriegelbare Schellen (2), die durch ein Gestänge (1) ein Seil, oder eine Kette miteinander verbunden sind, wobei eine Schelle (2) an dem Gestänge (1) drehbar befestigt ist.

2. Diebstahlsicherung nach Anspruch 1, dadurch gekennzeichnet, daß das Gestänge (1) in seiner Länge veränderbar ist.

3. Diebstahlsicherung nach einem der Ansprüche 1 oder 2, dadurch gekennzeichnet, daß das Gestänge (1) aus teleskopartig ineinandersteckbaren, stabförmigen Elementen besteht.

4. Diebstahlsicherung nach einem der vorhergehenden Ansprüche, dadurch gekennzeichnet, daß das Gestänge (1) aus mehreren Abschnitten (4) besteht, die durch ein Gelenk (5) miteinander verbunden sind.

5. Diebstahlsicherung nach einem der vorhergehenden Ansprüche, dadurch gekennzeichnet, daß die einzelnen Abschnitte (4) in ihrer Länge veränderbar sind, z.B. aus teleskopartig ineinandersteckbaren Elementen bestehen.

6. Diebstahlsicherung nach einem der vorhergehenden Ansprüche, dadurch gekennzeichnet, daß die Schellen (2) durch Gelenke (3) mit dem Gestänge (1) verbunden sind.

7. Diebstahlsicherung nach einem der vorhergehenden Ansprüche, dadurch gekennzeichnet, daß als Gelenke (3, 5) Drehgelenke, Kreuzgelenke, Kugelgelenke, oder Biegegelenke vorgesehen sind.

8. Diebstahlsicherung nach einem der vorhergehenden Ansprüche, dadurch gekennzeichnet, daß ein in der Mitte zwischen zwei Abschnitten (4) des Gestänges (1) angeordnetes Gelenk so gestaltet ist, daß die beiden Abschnitte parallel nebeneinander gelegt werden können.

9. Diebstahlsicherung nach einem der vorhergehenden Ansprüche, dadurch gekennzeichnet, daß an einem zwei Gestängeabschnitte (4) verbindenden Gelenk (15) eine lösbare Sperre vorgesehen ist, durch die das Gelenk (15) geringster Länge der Abschnitte (4) in einer Stellung blockierbar ist, in der die Längsachsen der Abschnitte (4) auf einer gemeinsamen Geraden liegen.

10. Diebstahlsicherung nach Anspruch 9, dadurch gekennzeichnet, daß die Sperre aus einer Hülse (21) besteht, die auf das Gelenk (15) aufsteckbar ist.

11. Diebstahlsicherung nach Anspruch 10, dadurch gekennzeichnet, daß die Hülse (21) einen Abschnitt (4) des Gestänges (1) bildet.

12. Diebstahlsicherung nach einem der vorhergehenden Ansprüche, dadurch gekennzeichnet, daß die Schellen (2) aus zwei halbkreisförmigen Bügeln (12, 13) bestehen, die an einem Ende durch ein Drehgelenk verbunden sind und mit ihrem anderen Ende ein Schnappschloß bilden.

13. Diebstahlsicherung nach einem der vorhergehenden Ansprüche, dadurch gekennzeichnet, daß das Schnappschloß mehrere Schließstellungen hat.

14. Diebstahlsicherung nach einem der vorhergehenden Ansprüche, dadurch gekennzeichnet, daß die Oberfläche der Schellen (2) und/oder des Gestänges (1) mit einem gummielastischen Überzug versehen ist.

15. Kombination aus einem Fahrrad und einer Diebstahlsicherung nach einem der vorhergehenden Ansprüche, dadurch gekennzeichnet, daß die Diebstahlsicherung als Strebe des Fahrradrahmens ausgebildet ist, wobei die Enden der Strebe lösbar mit dem Fahrradrahmen verbunden sind.

16. Kombination aus einem Fahrrad und einer Diebstahlsicherung, dadurch gekennzeichnet, daß die Diebstahlsicherung als Strebe (24) des Fahrradrahmens ausgebildet ist, wobei wenigstens ein Ende (32) der Strebe (24), das eine Schelle mit Sperrschloß aufweist, lösbar mit dem Fahrradrahmen verbunden ist und das andere Ende (30) der Strebe (24) flexibel und unlösbar mit dem Fahrradrahmen verbunden ist.

17. Kombination nach Anspruch 16, dadurch gekennzeichnet, daß das unlösbare Ende der Strebe (24) durch ein Gelenk (30) mit dem Fahrradrahmen verbunden ist.

18. Kombination nach einem der vorhergehenden Ansprüche, dadurch gekennzeichnet, daß der Bügel der Schelle aus mehreren Bogenstücken (12a, 12b, 13a, 13b) besteht, die durch Drehgelenke miteinander verbunden und in eine in ein Rahmenrohr einsteckbare Stabform zusammenlegbar sind.

19. Kombination nach einem der vorhergehenden Ansprüche, dadurch gekennzeichnet, daß die Strebe (24) mit Hilfe eines Bajonettverschlusses an dem Fahrradrahmen lösbar befestigt ist.

20. Kombination nach einem der vorhergehenden Ansprüche, dadurch gekennzeichnet, daß die Länge der Strebe auf das zur Kraftübertragung im Fahrradrahmen erforderliche Maß einstellbar ist.

21. Kombination aus einem Fahrrad- und einer Diebstahlsicherung nach einem der Ansprüche 1 bis 14, dadurch gekennzeichnet, daß ein Rahmenrohr (35) des Fahrrads eine langgestreckte Öffnung (36) aufweist, in die die Diebstahlsicherung einsetzbar ist.
